Europäisches Patentamt

European Patent Office

Office européen des brevets

(11) Publication number: **0 313 151**
**A2**

# (12) EUROPEAN PATENT APPLICATION

(21) Application number: **88202280.9**

(22) Date of filing: **12.10.88**

(51) Int. Cl.4: **C08J 3/18 , C08L 65/00 , C08L 73/00**

(30) Priority: **13.10.87 US 107192**

(43) Date of publication of application:
**26.04.89 Bulletin 89/17**

(84) Designated Contracting States:
**BE CH DE ES FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Allen, Robert Charles**
**8518 Cookwind**
**Houston Texas 77072(US)**
Inventor: **Groenewoud, Wilhelmus Maria**
**Badhuisweg 3**
**NL-1031 CM Amsterdam(NL)**
Inventor: **De Jong, Wouter**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Plasticised polymer composition.**

(57) Plasticized compositions exhibiting enhanced thermal processability are produced by substantially saturating a linear alternating polymer of carbon monoxide and at least one olefinically unsaturated compound with a liquid solvent at the melting point of the plasticized composition.

EP 0 313 151 A2

## PLASTICISED POLYMER COMPOSITION

This invention relates to a plasticised polymer composition comprising polyketone polymer, to a process for improving the thermal processability of a polyketone polymer, and to a process for thermally deforming a polyketone.

The class of polymers of carbon monoxide and olefin(s) has been known for a number of years. More recently, the subclass of linear alternating polymers of carbon monoxide and at least one ethylenically unsaturated compound, e.g., ethylene or ethylene and propylene, has become of greater interest. The polymers have been shown to be of the formula -CO(A)- where A is the moiety of olefinically unsaturated compound polymerized through the olefinic unsaturation. For example, when the olefinically unsaturated compound is ethylene, the polymer will be represented by the formula $-CO-\{CH_2-CH_2-\}$. A process for the production of these linear alternating polymers is illustrated in European Patent Applications 121,965 and 181,014. That process involves a catalyst composition formed from a Group VIII metal selected from palladium, cobalt or nickel, the anion of a non-hydrohalogenic acid having a pKa below 2 and a bidentate ligand of phosphorus, arsenic or antimony. The resulting polymers are relatively high molecular weight thermoplastic polymers having utility in the production of structural articles such as containers for food and drink and parts for the automobile industry.

The polyketones, as they are called sometimes, are characterized by relatively high melting points, generally over 175 °C, depending on the molecular weight and the chemical nature of the polymer. A melting point of this magnitude is of value in many applications, e.g., where a shaped article is to be subjected to conditions of elevated temperature. From a processing point of view, however, the high melting point is detrimental since additional energy is required to effect changes in the shape of a polymer article and sufficiently elevated temperatures cause some degree of thermal degradation, e.g. by cross-linking.

The processing temperature of a polymer is often lowered through the production of a plasticised composition, that is, lowering a melting point through the formation of a composition comprising the polymer and a plasticising agent. The resulting composition will have a melting point lower than the unplasticized polymer. But incorporation of a number of known P.V.C. plasticising agents proved to be without effect. Also, once a plasticising agent has been incorporated into a polymer, it is not generally possible to easily remove the plasticising agent and return the polymer to the unplasticised state where the higher melting point is observed. It would be of advantage to produce plasticised compositions of polyketone polymers which exhibit greater processability at a comparatively lower temperature. It would also be of advantage to provide a composition which incorporates a plasticiser which, subsequent to processing, may be removed to regenerate the unplasticised composition.

It has now been found that these objectives are met through the use of a solvent as a processing aid. Accordingly, the invention relates to a plasticised polymer composition, characterized by comprising a linear alternating copolymer of carbon monoxide and at least one olefinically unsaturated compound, admixed with a plasticising amount of an organic or inorganic solvent. When water is used to substantially saturate a polyketone polymer at elevated temperature, a plasticised composition is produced of reduced melting point, relative to the non-plasticised polymer. Increased ease of processing at elevated temperature is observed for a polymer which is substantially saturated at the melting point of the substantially saturated, (i.e., plasticized), polymer. Reduction of the degree of saturation of the polymer subsequent to processing restores the original melting point to the resulting non-plasticized polymer.

The polymers which are processed according to the process of the invention are the linear alternating polymers of carbon monoxide and at least one olefinically unsaturated compound often referred to as polyketones. Suitable olefinically unsaturated compounds are hydrocarbons having from 2 to 20 carbon atoms inclusive, preferably from 2 to 10 carbon atoms inclusive, either being aliphatic such as ethylene and other alpha-olefins including propylene, butene-1, octene-1 and dodecene-1, or being arylaliphatic containing an aryl substituent on an otherwise aliphatic molecule, particularly an aryl substituent on a carbon atom of the ethylenic unsaturation. Illustrative of this latter class are styrene, p-methylstyrene, p-ethylstyrene and m-methylstyrene. Preferred polyketone polymers are copolymers of carbon monoxide and ethylene or terpolymers of ethylene and a second alpha-olefin, of greater than 3 carbon atoms, i.e. from 3 to 20 carbon atoms inclusive, particularly propylene.

Of particular interest are those polymers of molecular weight from 1,000 to 200,000, particularly those of molecular weight from 10,000 to 50,000, and containing substantially equimolar quantities of carbon monoxide and unsaturated hydrocarbon.

The physical properties of the polyketone polymers depend in part upon the molecular weight, whether the polymer is a copolymer or a terpolymer and the relative proportion of any second hydrocarbon monomer. Typical melting points vary from about 175 °C to about 300 °C.

The solvent which is admixed with the polyketone appears to lower the melting point of the polymer, while it also acts as a plasticiser at temperatures below the melting point. This means that less friction, and thus, less heating, is encountered when the polymer is subjected to shear or other stresses in processing equipment, such as extruders. From repeated calorimetric experiments it seems likely that the polymer undergoes less cross-linking reactions during processing when it is mixed with a solvent according to the invention.

The solvent may be organic or inorganic, but is preferably polar. Suitably liquid at normal temperature and pressure. It is also preferred that the molecule of the solvent contains oxygen, such as in alcohols, ethers, glycols, ketones, aldehydes or water. Particularly useful are solvents selected from water, alcohols and ketones, especially water. Added advantages of water are its low price and non-toxicity.

Suitably the solvent is present in an amount of from 5 to 45%, preferably 10 to 40%, by weight based on the total composition. Especially preferred are compositions containing 10 to 20% by weight.

The plasticized compositions of the invention are produced by maintaining the polymer in contact with solvent at elevated temperature until the polymer has become at least substantially saturated with solvent at the temperature at which the substantially saturated polymer melts. As used herein, a substantially saturated polymer is at least 75% saturated with solvent, preferably at least 95% saturated with solvent. The method of contacting the polymer particles with solvent is not critical but advantageously the polymer becomes substantially saturated with solvent vapour at elevated temperatures. For instance, contact of the polymer with liquid water at temperatures where water is normally liquid does not produce plasticized compositions of sufficiently reduced melting point even though substantially saturated. However, saturation of the polymer with water vapour, i.e., steam, at elevated temperatures, serves to produce compositions whose melting points are markedly lower than the unplasticized polymer. The compositions substantially saturated with water at the melting point of the composition will have a melting point as much as from about 30 °C to about 70 °C lower than non-saturated polymer or even more in some instances. Without wishing to be bound by any particular theory, it appears that the solvent vapour is able to substantially saturate at least any amorphous portion of the polymer and reach equilibrium with the crystalline portion of the polymer at a temperature below the melting point of the polymer and will thereby produce plasticized compositions of reduced melting point, relative to the polymer, if substantially saturated at that reduced melting point.

The physical nature of the polymer undergoing contact with the solvent vapour is not critical, although in general the smaller the particle size of the polymer the faster it will reach saturation and/or equilibrium with water. The process of the invention is suitable when the polymer is in a physical form no larger than the form of nibs from an extruder, e.g., about 0.6 cm in length and 3.2 cm in diameter. Smaller particles give faster but not substantially different results. Larger particles are also satisfactory but the time required for saturation is longer and the use of such larger particles is limited by practicality.

The method of providing the vapour is not critical so long as the polymer becomes substantially saturated with vapour at the temperature at which the substantially saturated polymer composition melts. In a preferred modification the polymer is contacted with vapour, e.g. steam, at temperatures above the normal boiling point of the solvent (water). Under these more energetic conditions, the substantial saturation of the polymer takes place in a relatively short time, such as, for example, the time required to gradually heat the polymer in the presence of excess solvent (water) from ambient temperatures to a melting point over a matter of a few minutes, e.g., 10 to 20 minutes, during which time the solvent vaporises.

The amount of solvent required to substantially saturate the polymer is not large, for example from 10% to 45% by weight based on the total composition, preferably from 20% to 40% by weight. The presence of additional solvent is not detrimental, but serves no useful purpose since once the polymer has reached saturation/equilibrium with solvent vapour the presence of additional liquid or vapour will have no beneficial effect.

The resulting plasticised composition is sufficiently stable to be processed, without substantial decomposition, one or more times at temperatures at or somewhat above the melting point of the composition but below the melting point of the unplasticised polymer. The melting point of any particular plasticised composition is relatively constant so long as the composition remains substantially saturated with water. The composition may therefore be melt processed a number of times while taking advantage of the easier melt processing made available by the reduced melting point and the resulting lessened possibility of thermal degradation.

The plasticised composition is melt processed by a number of conventional methods which involve the polymer while in a molten or nearly molten state. Such methods include injection moulding, extrusion,

3

compression moulding, thermoforming, sheet extrusion and sheet casting. Such processes are conducted more easily and with lower energy requirements when the plasticized composition is employed than when pure polymer is used. The plasticised composition may contain additional conventional polymer additives which are inert to the polymer and the plasticizer such as blowing agents, mould release agents and antioxidants which are added to the polymer by blending, milling or other conventional means prior to or together with the treatment with solvent (vapour).

Subsequent to processing, if desired, the polymer can be returned to the non-plasticised state by reducing the degree of saturation. This removal is effected by heating the plasticised composition to a temperature above its melting point, say 10 °C to 30 °C above its melting point, i.e. to a temperature at which the polymer is no longer substantially saturated. Preferably, the composition is maintained at a reduced pressure, preferably from about 0.9 atmosphere to about 1.2 atmosphere to remove. The original melting point of the polymer, now no longer substantially saturated, is thereby restored and enhanced physical stability at elevated temperature is observed as compared with polymer processed by normal methods. This could be due to the absence of cross-linking reactions, often occurring at higher temperatures. Alternatively, the plasticised composition is maintained when desired, to take advantage of continuing ease of processability or other useful properties of the plasticized composition such as enhanced modulus and toughness, as compared with the polymer in an unplasticized state. The plasticized compositions are useful in a number of applications which take advantage of these properties including the production of shaped containers for the food and drink industry and extensively shaped parts for the automotive industry. Because of the less rigorous processing requirements, the composition can be drawn into cables or extruded into structural articles for construction applications.

The invention is further illustrated by the following Examples.

## EXAMPLES

A series of experiments was conducted which employed differential scanning calorimeter (DSC) to determine the melting point of polyketone polymers and plasticised compositions prepared therefrom. In this device, a covered pan is employed which has a pinhole in the cover. The pan and its cover are placed in a chamber filled with an inert gas, typically at 56-70 bar, and the pan and a polymer/solvent sample are heated while the energy requirement for continuing temperature increases is measured. By measuring, in effect, the temperature at which the energy equivalent of the heat of fusion is required to further raise the temperature of the pan contents, the melting point is determined. In a typical experiment, the pan and contents are heated past the point where the initial melting point is reached, cooled until the polymer resolidifies and then heated until melting takes place a second time. The second melting point is characteristically slightly lower than the first. In these experiments, a pressure of 56 bar of helium was maintained in the chamber and a normal heating rate of 20 °C/min was maintained.

## EXAMPLE 1

A series of melting point determinations was made using a linear alternating terpolymer of carbon monoxide, ethylene and propylene (melting point equals 220 °C) and various amounts of water. The resulting mixtures were heated in the DSC pans until a melting point was noted. The composition of the initial mixtures and the melting point of the resulting composition are shown in Table I.

TABLE I

| Sample | % wt Polymer | % wt Water | M.Pt., °C |
|---|---|---|---|
| 1 | 90 | 10 | 206 |
| 2 | 82 | 18 | 199 |
| 3 | 75 | 25 | 188 |
| 4 | 66 | 34 | 162 |
| 5 | 59 | 41 | 156 |
| 6 | 50 | 50 | 155 |
| 7 | 40 | 60 | 155 |

EXAMPLE 2

Following the general procedure of Example 1, a series of melting points was determined using a linear alternating copolymer of carbon monoxide and ethylene (melting point equals 260 °C) and various amounts of solvents. The composition of the initial mixtures and the melting point of the resulting composition are shown in Table II.

TABLE II

| Solvent | %wt Solvent | M.Pt., °C |
|---|---|---|
| water | 7.3 | 236 |
| | 10.2 | 222 |
| | 11.0 | 231 |
| | 11.0 | 225 |
| | 11.5 | 235 |
| | 17.8 | 217 |
| | 22.1 | 207 |
| methanol | 7.5 | 242 |
| | 16.6 | 234 |
| | 21.2 | 223 |
| | 28.8 | 209 |
| | 30.7 | 203 |
| ethanol | 6.6 | 254 |
| | 14.4 | 248 |
| | 19.6 | 245 |
| | 25.6 | 237 |
| | 32.2 | 226 |
| acetone | 14.2 | 253 |
| | 23.9 | 239 |
| | 32.1 | 232 |
| toluene | 18.3 | 253 |
| | 27.9 | 248 |
| n-hexane | 16.1 | 259 |
| | 27.2 | 258 |

From these data the melting point depression for each solvent was calculated. The results of this calculation are given in Table III.

TABLE III

|  | M.pt. depression ($^\circ$C/%wt) |
|---|---|
| water | 3.8 |
| methanol | 1.9 |
| ethanol | 1.0 |
| acetone | 1.0 |
| toluene | 0.5 |
| n-hexane | 0.2 |

The melting point depression of water in carbon monoxide/ethylene/propylene based polyketones, is typically in the range of 1.5 to 2.5 $^\circ$C/%wt, depending on the composition of terpolymer.

It appears that the greatest melting point depressions are obtained with oxygen containing, polar solvents, especially water.

## Claims

1. Plasticised polymer composition, characterized by comprising a linear alternating polymer of carbon monoxide and at least one olefinically unsaturated compound, admixed with a plasticising amount of an organic or inorganic solvent.

2. A composition as claimed in claim 1, characterized in that the solvent is polar.

3. A composition as claimed in claims 1 or 2, characterized in that the solvent is oxygen-containing.

4. A composition as claimed in any of claims 2 and 3, characterized in that the solvent is selected from water, alcohols and ketones.

5. A composition as claimed in claim 4, characterized in that the solvent is water.

6. A composition as claimed in any of claims 1-5, characterized in that the solvent is present in an amount of from 5 to 45% by weight, based on the total composition.

7. A composition as claimed in claim 6, characterized in that the solvent is present in an amount of 10 to 20%.

8. A composition as claimed in any of claims 1-7, characterized in that the polymer is a linear alternating copolymer of carbon monoxide and ethylene, or a linear alternating copolymer of carbon monoxide, ethylene and another olefin such as propylene.

9. Process for improving the thermal processability of a linear alternating polymer of carbon monoxide and at least one olefinically unsaturated compound characterized by saturating said polymer with a solvent at the melting point of the substantially saturated polymer but at a temperature below the melting point of the polymer.

10. Process for thermally deforming a linear alternating polymer of carbon monoxide and at least one olefinically unsaturated compound characterized by substantially saturating said polymer with a solvent, at the melting point of the substantially saturated polymer but at a temperature below the melting point of the polymer, deforming the resulting polymer composition at a temperature at or above the melting point of the composition but below the melting point of the polymer, and reducing the degree of saturation of the deformed polymer composition without further deformation.

11. A process as claimed in claim 10, characterized in that the degree of saturation is reduced by heating the polymer composition from 10 $^\circ$C to 30 $^\circ$C above the melting point of the composition.